(19) Europäisches Patentamt
European Patent Office
Office européen des brevets

(11) **EP 4 375 926 A1**

(12) **EUROPEAN PATENT APPLICATION**

(43) Date of publication:
**29.05.2024 Bulletin 2024/22**

(21) Application number: **22210031.5**

(22) Date of filing: **28.11.2022**

(51) International Patent Classification (IPC):
**G06T 7/30** *(2017.01)* **G06T 7/38** *(2017.01)*

(52) Cooperative Patent Classification (CPC):
**G06T 7/30; G06T 7/38;** G06T 2207/10056;
G06T 2207/10064

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Lunaphore Technologies SA**
**1131 Tolochenaz (CH)**

(72) Inventors:
• **CASQUEIRO, Gilles**
**1030 Bussigny (CH)**

• **ARN, Lionel**
**1164 Buchillon (CH)**

(74) Representative: **reuteler & cie SA**
**Chemin de la Vuarpillière 29**
**1260 Nyon (CH)**

Remarks:
A request for correction dated 18.01.2023 has been filed pursuant to Rule 139 EPC. A decision on the request will be taken during the proceedings before the Examining Division (Guidelines for Examination in the EPO, A-V, 3.).

(54) **DIGITAL IMAGE PROCESSING SYSTEM**

(57) A digital image processing system configured for processing a plurality of image capture scans of a sample obtained from a microscope in a corresponding plurality of scan cycles, each image capture scan comprising a plurality of individual field of view (FoV) images that form one image when stitched together, each FoV image having a border zone overlapping a border zone of an adjacent FoV image, the plurality of image capture scans corresponding to a plurality of images that are stackable, the system comprising a computing system comprising a stitching and stacking program module installed and executable in the computing system. The stitching and stacking program module is configured to compute a position of each of the FoV images from all image capture scans concomitantly and thereby concomitantly stitch together the individual FoV images and stack said plurality of images.

FIG 7

EP 4 375 926 A1

**Description**

The present invention relates to a digital image processing system for generation of images from a plurality of smaller field of view (FoV) images. One of the specific applications of the invention relates to a digital image processing module of a biological sample processing system, for analyzing tissue samples fixed on a support, using an imaging system including a microscope.

Analysis of biological tissue samples include Immunohistochemistry (IHC) and Immunofluorescence. Samples include whole tissue samples, surgical biopsies or needle biopsies of tissue types, blood samples or cell smears. Tissue samples may be provided as tissue cut into thin sections and subsequently applied to a support, tissue samples smeared on a support, tissue samples provided as fluids dropped or otherwise applied on to the support. Tissue samples may for instance be samples of breast tissue, lung tissue, tonsil tissue, colon tissue, lymph node tissue, prostate tissue, gut tissue, liver tissue or kidney tissue. Samples for analysis may be tumor samples, including biopsies from cancers, for example breast cancer, lung cancer, prostate cancer, ovarian cancer, colorectal cancer and melanoma. The present invention may also be applied to samples of living tissue cultures.

IHC and Immunofluorescence involve the use of specific probe molecules such as antibodies to detect the existence of specific biomarkers (e.g. antigens) that may be expressed by cells in a tissue sample. Immunofluorescence allows to observe multiple molecular measurements on a single sample using multi-cycle multiplexing techniques involving the elution of the target antibody or the inactivation of labeling molecules after each staining and imaging cycle. When whole slides or large areas of interest are imaged with high magnification objectives, image processing software with an image stitching program is needed to obtain the whole image. Moreover, in order to allow analysis of the sample with different labeling molecules (markers) used in the plurality of staining cycles, the image processing software needs to overlay and align images from different cycles of the multiplexing process.

Alignment errors between stitched image portions and between overlayed images may lead to errors in the interpretation of results, for instance by leading to an amplification of artefacts or the filtering out of relevant signals, thus leading to incorrect associations between certain markers and associated cells.

It is well known in digital imaging that when an object to be imaged is larger than a single field of view (FoV) of the optical image capture system, one can acquire multiple images with different positions representing each a portion of the image and assemble them numerically to reconstruct the entire image. During the scanning process to capture the individual FoV images, the positioning precision of the individual FoV images with respect to the image is typically lower than the physical resolution of the image. Therefore, image stitching typically involves searching for the best alignments on pairwise overlaps, and then determining the optimal position of each FoV on the output mosaic. Digital alignment of two related FoV images, in this case using their overlapping areas, comprises determining the parameters of a motion model or any spatial transformation function. Applying this motion model on the FoV images make their overlapping content coincide.

Similarly, when an object to be imaged is imaged multiple times with imprecise positioning, i.e. with potential movement between each acquisition, the stacked images must then be numerically registered. Registration comprises aligning two or more overlying images and applying a transformation to generate a coherent assembled output image stack.

In a digital image processing of a biological sample processing system, for analyzing tissue samples fixed on a support, both image capture scanning and stacking are useful to allow analysis of the sample with different labeling molecules (markers) used in the plurality of staining cycles as mentioned previously.

In the context of whole slide image scanners, either the sample to be imaged or the microscope is mounted on a motorized stage for relative movement between the sample and microscope. The precision of displacement is typically lower than the optical resolution of the image capture system.

Image processing may include pre-processing steps such as dark and flat field correction and the correction of optical aberrations of individual FoV images. It can also include post-processing steps such as equalizing brightness, contrast, or the overall colorimetry, and blending the FoV images to smooth out the joints.

When an image capture scan is performed multiple times, for instance to capture the scene at different moments or under different conditions, the stitching can be performed by:

 1. First stitching the image capture scans individually and then registering them, or
 2. First registering individual stacks of FoV images and then stitching them.

The first option is the only solution when the image capture scanner does not provide access to the individual FoV images. In this case, a rigid registration is likely not to produce satisfying results. This is due to the large size of the image capture scans and the fact that stitching introduces small residual errors that will eventually add up along the joints, resulting in significant alignment errors. An elastic registration, i.e., deforming each image capture scan to align them over the entire image might give better results, however this approach introduces distortions and interpolations in the image, increases the complexity and risk of undesirable effects, and significantly increases the computational effort of the stitching process.

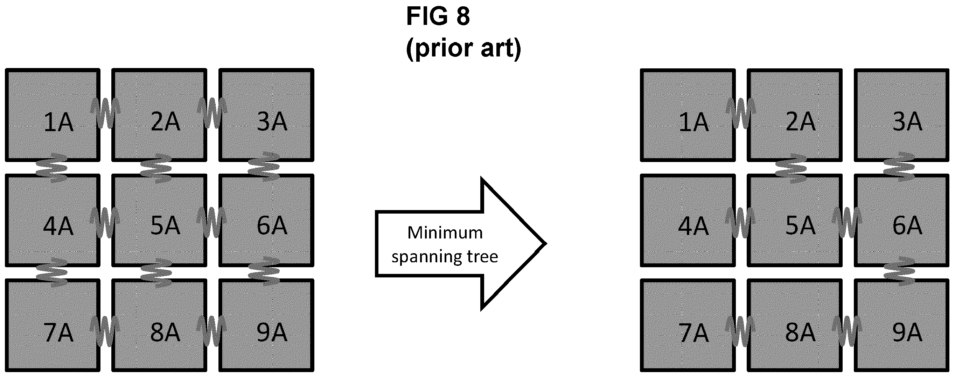

The second option corresponds to a conventional ASHLAR method. In the ASHLAR method, the stitching of the first image in the stack is performed by modelling the system as a graph where nodes are the FoV images, and the vertices are the alignments. Each vertex is associated with an error computed from the normalized cross correlation ($E_{NCC}$), allowing the computation of the minimum spanning tree as illustrated in figure 8. The system is thus balanced, and stitching is then straightforwardly performed along the paths of the graph. In this method, stacking consists in registering the FoV images of subsequent image layers with respect to the FoV images of the first stack image. In this way, the FoV images of a subsequent layer of the stack are not directly stitched together, but rather indirectly stitched by registering their FoV images against the FoV images of the first image layer.

The ASHLAR method of stitching FoV images may lead to undesirable alignment errors, especially as the number of FoV images to be assembled increases. Its balanced system makes it sensitive to errors; a single mismatch in the graph propagates to multiple FoV images and their neighbors for all layers. The minimum spanning tree also does not allow to detect these errors, and the algorithm relies solely on the $E_{NCC}$ to detect mismatches. As the number of FoV images and layer increases, so does the probability of the presence of mismatches, and the algorithm may prove unreliable for large images.

In image stitching methods, a main part of the procedure is to determine the individual alignments and registrations between adjacent FoV images, map them on a 2D or 3D projective layout and perform a global optimization to adjust all mapping parameters. A global optimization is necessary when the system is overdetermined, i.e., when there are as many or more alignments than FoV images, in which case the pairwise alignments probably yield conflicting positions of the FoV images. The reason why pairwise alignments can be incompatible lies in the experimental nature of their determination. Optimization aims at finding the best position or spatial transformation for each FoV image while trying to preserve as best as possible each pairwise alignments. The result is a trade-off solution minimizing the deviation of individual tile position from their alignments. These remaining deviations are herein referred to as stresses.

In view of the foregoing, it is a general object of this invention to provide a digital image processing system for the generation of a stack of registered image layers from a plurality of smaller field of view (FoV) images that is accurate and reliable.

A more specific object of the invention for biological sample processing is to provide an accurate and reliable digital image processing system for the generation of a stack of registered image layers of tissue samples fixed on a support, each image layer obtained from different cycles of the multiplexing process.

It is advantageous to provide a digital image processing system for the generation of a stack of registered image layers that is accurate.

It is advantageous to provide a digital image processing system for the generation of a stack of registered image layers that is reliable.

It is advantageous to provide a digital image processing system for the generation of a stack of registered image layers that is well adapted for the stacking of multiplexed immunofluorescence images of a biological tissue sample, to enable the reliable and accurate analysis of the tissue sample.

Objects of this invention have been achieved by providing a system according to claim 1. Dependent claims set forth various advantageous features of embodiments of the invention.

Disclosed herein is a a digital image processing system configured for processing a plurality of image capture scans of a sample obtained from a microscope in a corresponding plurality of scan cycles, each image capture scan comprising a plurality of individual field of view (FoV) images that form one image when stitched together, each FoV image having a border zone overlapping a border zone of an adjacent FoV image, the plurality of image capture scans corresponding to a plurality of images that are stackable, the system comprising a computing system comprising a stitching and stacking program module installed and executable in the computing system. The stitching and stacking program module is configured to compute a position of each of the FoV images from all image capture scans concomitantly and thereby concomitantly stitch together the individual FoV images and stack said plurality of images.

In an advantageous embodiment, concomitant computation of each of the FoV images from all image capture scans is based on a mesh spring model where nodes are the positions of the FoV images and the nodes are interconnected by springs with a predefined spring constant, where initial lengths of the springs represent the pairwise alignments between overlapping FoV image border zones and the alignments between FoV images of different scan cycles.

In an advantageous embodiment, the spring constant is different between FoV images of a given cycle and the spring constants between FoV images of different cycles.

In an advantageous embodiment, the spring constant is tuneable to allow changing an equilibrium in positioning of between FoV images of a given layer and FoV images of different layers.

In an advantageous embodiment, the stitching and stacking module comprises an algorithm to determine an alignment between FoV images employing a correlation maximization method or a feature detection and description method such as SIFT or SURF or ORB associated to a feature matching method such as RANSAC or FLANN.

In an advantageous embodiment, the stitching and stacking program module comprises an optimization algorithm based on calculating a gradient descent or based on a linear regression model, configured to compute a position of each of the FoV images from all image capture scans concomitantly.

In an advantageous embodiment, the stitching and stacking program module is configured to detect outlier FoV images that have pairwise connections to adjacent FoV images outside of a defined threshold.

In an advantageous embodiment, the stitching and stacking program module is configured to remove the detected outlier FoV images from the optimization calculation and re-run the optimization algorithm.

In an advantageous embodiment, the system is configured for processing a plurality of image capture scans of a biological tissue sample obtained from a microscope in a corresponding plurality of scan cycles,

In an advantageous embodiment, at least some of the plurality of scan cycles correspond to staining cycles of the sample, obtained from a multiplexing process.

Also disclosed herein is a biological sample processing system including a sample processing station, a microfluidic cartridge mounted in/on the sample processing station, an imaging unit comprising a microscope movable relative to the microfluidic cartridge configured to capture FoV images of a biological tissue sample in the microfluidic cartridge, and a digital processing system according to any of the above embodiments.

The biological sample processing system of the preceding claim configured for performing a plurality of immunofluorescence staining cycles of the biological tissue sample in a multiplexing process.

In an advantageous embodiment, each staining cycle comprises a DAPI marker such that each image of the multiplexing process comprises cell nuclei features.

In an advantageous embodiment, at least some of the staining cycles comprises different markers such that the corresponding images are different one from the other, except for cell nuclei features.

In an advantageous embodiment, the biological sample processing system comprises a user interface configured to display the images, wherein the system is configured to display images of the stack individually or in a combination of features of two or more images of the stack.

Further objects and advantageous features of the invention will be apparent from the claims, from the detailed description, and annexed drawings, in which:

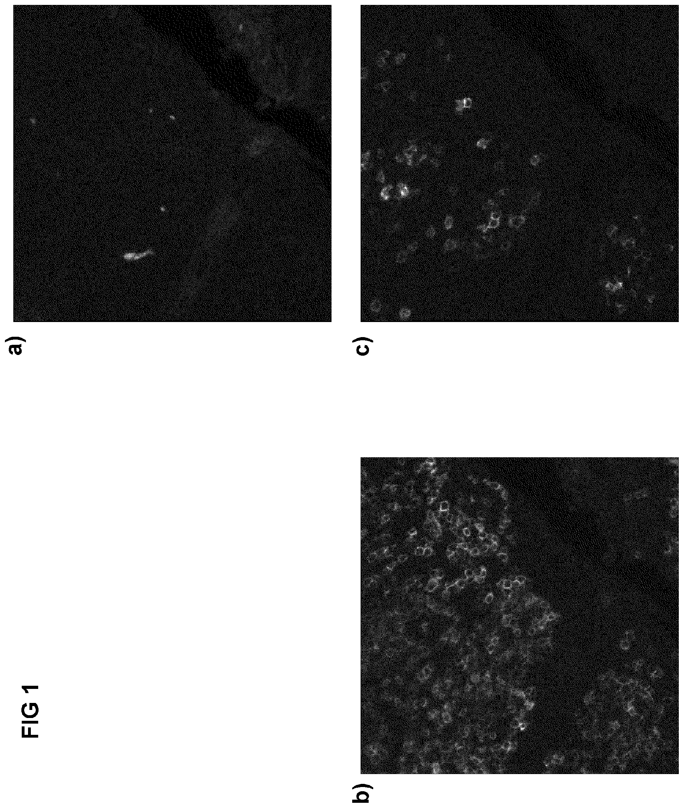

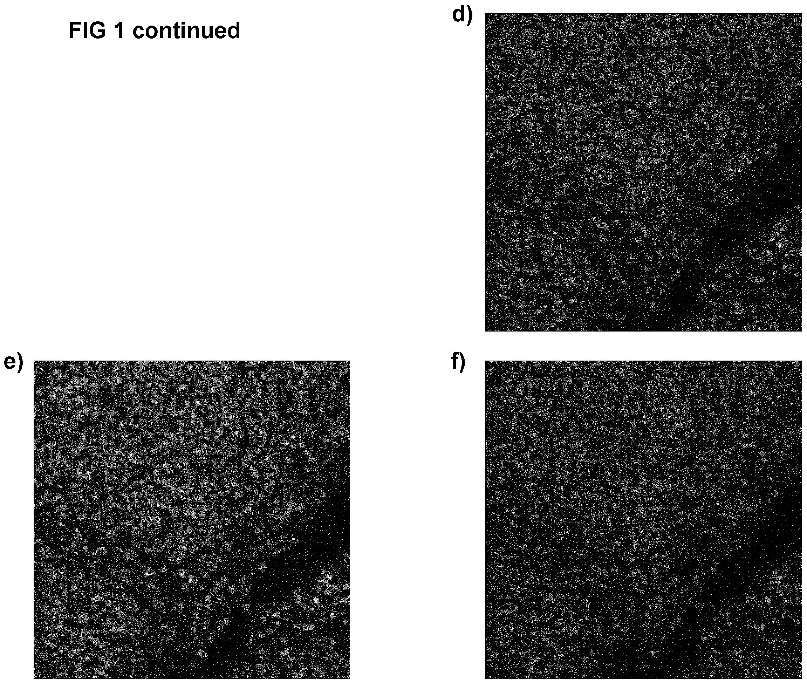

Figures 1a to 1f are immunofluorescence images of a tissue sample obtained from a plurality of FoV images captured by a microscope coupled to a camera, whereby figures 1a, 1b and 1c shows images from the same region of a tissue stained with CD14, CD56 and CD163 markers respectively, each acquired at different cycles of a multiplexing process and figures 1d, 1e and 1f shows images from the same region from the DAPI counterstaining of the aforesaid different cycles, according to an embodiment of the invention;

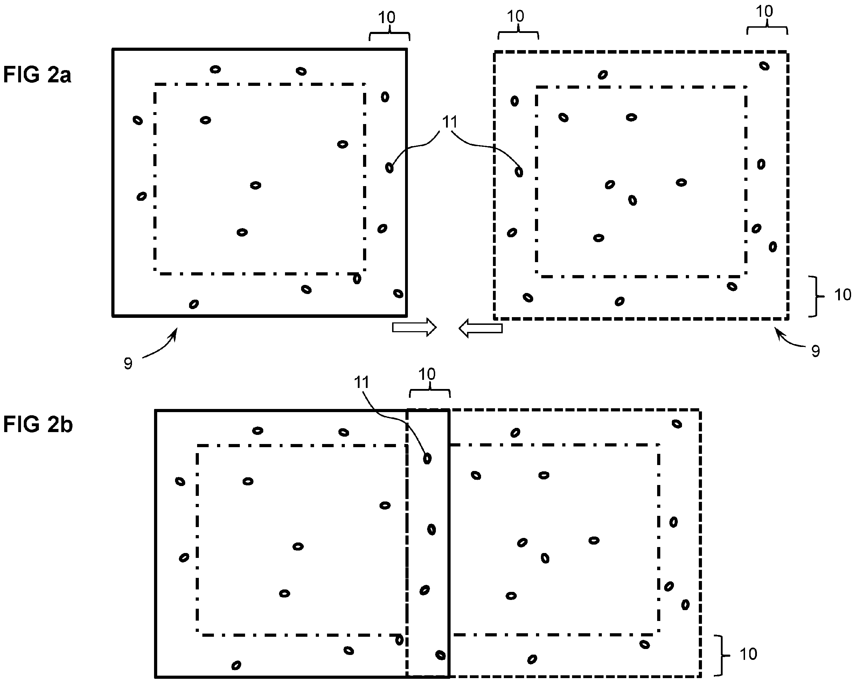

Figures 2a and 2b are schematic simplified illustrations of a pair of adjacent FoV images of a tissue sample image to illustrate an image alignment estimation using overlapping areas;

Figure 3 illustrates a flow diagram of an image stitching process according to an embodiment, comprising an algorithm for the determination of pairwise alignments on the overlaps of the horizontal and vertical edges of the image capture scan pattern, and also against corresponding FoV images on other cycles;

Figure 4 illustrates a flow diagram of an image stitching process according to an embodiment, comprising an algorithm for global optimization, aimed at defining a position for each FoV in the entire stack assembly;

Figures 5a and 5b are schematic diagrams illustrating an adjacency graph with pairwise alignments for ASLAR (Fig. 5a) and according to an embodiment of the invention (Fig. 5b).

Figures 6a to 6g illustrate in a schematic simplified manner a method of stitching and stacking of images according to an embodiment of the invention;

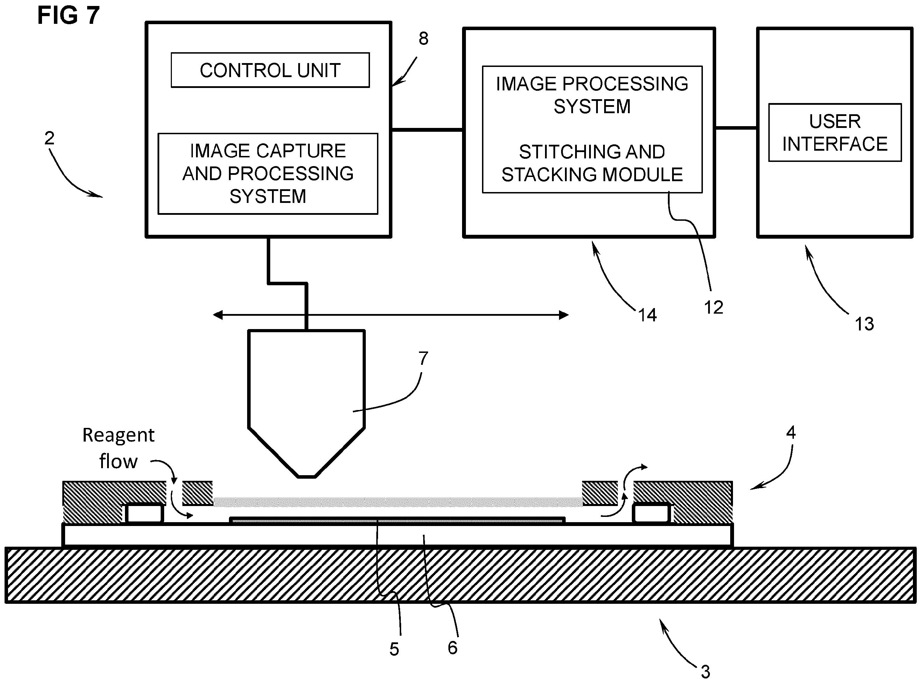

Figure 7 is a schematic simplified illustration of a biological sample processing system according to an embodiment of the invention;

Figure 8 illustrates in a schematic simplified manner a minimum spanning tree computation step in a conventional ASHLAR stitching method.

Referring to the figures, a biological sample processing system 1 according to embodiments of the invention comprises an imaging unit 2, a sample processing station 3, a microfluidic cartridge 4 mounted in/on the sample processing station 3. The biological sample processing system 1 may include or be connected or connectable to a user interface 13 for inter alia displaying images of the sample captured and processed by the imaging unit. It may be noted that images may not only be processed for viewing on a display, but also be processed with the assistance of artificial intelligence program modules to output analysis results in various formats and degrees of analysis (e.g. diagnostic outputs). The biological sample processing system 1 is for analysing biological tissue samples 5 that may be fixed to a support 6. The support 6 may be in form of a conventional microscope slide, for instance made of glass and having typical dimensions of 75 x 25 mm surface area and about 1mm thickness. Such microscope slides are widely used for fixing tissue samples for placement under a microscope objective to analyse the samples manually or by an automated imaging system. Other supports, whether conventional or not, may however also be used for fixing a tissue sample for analysis with an imaging system according to embodiments of the invention.

In an advantageous embodiment, the sample processing station and microfluidic cartridge may have a configuration for instance as described in PCT/EP2020/076978, which is incorporated herein by reference thereto.

Various tissue samples may be analysed, for instance tissue samples from biopsies, for instance to detect a possible cancer. Use of a single sample for analysis with different labelling molecules (markers) in a multiplexing process having a plurality of staining cycles is therefore an advantage. The combination of images from various staining cycles also allows to retrieve valuable information on the state of the tissue sample that individual images may not provide. Images from different scans that are viewable in the user interface 13, may be combined in various manners, or may be viewed individually, depending on the application and analysis requirements, as *per se* known.

The imaging unit 2 comprises a microscope 7, and an image capture and processing system 8 comprising an image capture sensor and associated electronic circuit and software for capturing images viewed through the microscope lens. The microscope 7 is movably mounted relative to the sample processing station 3, whereby either the microscope is mounted on a movable motorized support, or the sample processing station comprises a motorized sample stage. The motorized microscope support or sample stage is configured to move the microscope relative to the sample in increments that are slightly smaller than width of the field of view (FoV) image 9 captured by the microscope, such that adjacent FoV images 9 have overlapping borders areas 10 with the same image information. This allows the adjacent images to be aligned with each other by matching the overlapping border areas.

Alignment may be assisted by one or more reference features. In immunofluorescence, nuclear markers such as the DAPI marker (4',6-diamidino-2-phenylindole), which is a fluorescent stain that binds to adenine-thymine-rich regions in DNA, may be used in the staining cycles to image the nuclei of cells that form fixed easily identifiable reference features 11 in the FoV images. These reference features allow not only to align image layers of the stack from multiple staining cycles, but also facilitate the stitching of FoV images in a specific layer.

It may be noted that the stitching of FoV images from a single image layer (an image scan) may be performed without the DAPI marker information, even if the latter is advantageous, however aligning stacked image layers from different staining cycles using different markers would require a common feature, such as the cell nuclei, to align the stacked images since they are otherwise different in content if different markers are used in each cycle. Therefore, the DAPI marker is typically present in conjunction with one or more other specific markers in each staining cycle.

Imaging systems for capture and storage of the individual images, that may for instance be used for the capture of the individual FoV images, are *per se* well known and do not need to be further described herein.

A novel aspect of the invention resides in the system for image processing after capture of the individual FoV images, for stitching of the FoV images to compose the image of the sample 5 and for stacking of images of the sample 5 from different scanning cycles, whereby for each staining cycle of the sample at least one image scan is performed.

According to an aspect of the invention, an advantageous aspect is the image stitching process integrates the image stack registration. The stitching and stacking module 12 thus performs a global optimization process to determine the position of each of the FoV images from all image capture scans concomitantly. The stitching and stacking module utilizes both the alignments of adjacent FoV images from all image capture scans as well as the alignments of the FoV images against the corresponding ones on the other image capture scans. This stitching and stacking module thus accounts for an additional dimension. For example, the first two dimensions correspond to those of a 2D projective layout, and the third dimension corresponds to the alignments between FoV images from different image capture scans. In this way, a global optimization is done on each image capture scan with an interdependence with the other image capture scans.

*Implementation example*

In the case of multiplexed immunofluorescence (mIF), the image capture scanning typically follows a sparse grid pattern. This means that FoV images are acquired one after each other on a rectangular image capture scanning grid, and that some of them can be skipped to save storage space and acquisition time. This pattern remains unchanged between each image capture scan, and it always captures a small overlap border zone 10 on the vertical and horizontal edges of each FoV image.

It is possible to acquire multiple images at different fluorescence wavelengths to detect multiple markers per staining cycle. But only the counterstaining image (using a DAPI marker) is used by the stitching process. The other images are considered spatially coincident when building the final assembly of stitched and stacked images. In an embodiment of a biological sample processing system having a sample processing station configuration as described in PCT/EP2020/076978, on which the microfluidic cartridges are mounted, the acquisition of images may occur during the interval between two movements of the sample processing station.

Assuming that a mechanical positioning uncertainty is limited to the x and y coordinates of the microscope 7 relative to the sample 5, the alignments between adjacent FoV images and those from different scan cycles can be expressed as simple translations. The stitching and stacking module is configured to determine the x and y coordinates of each FoV image.

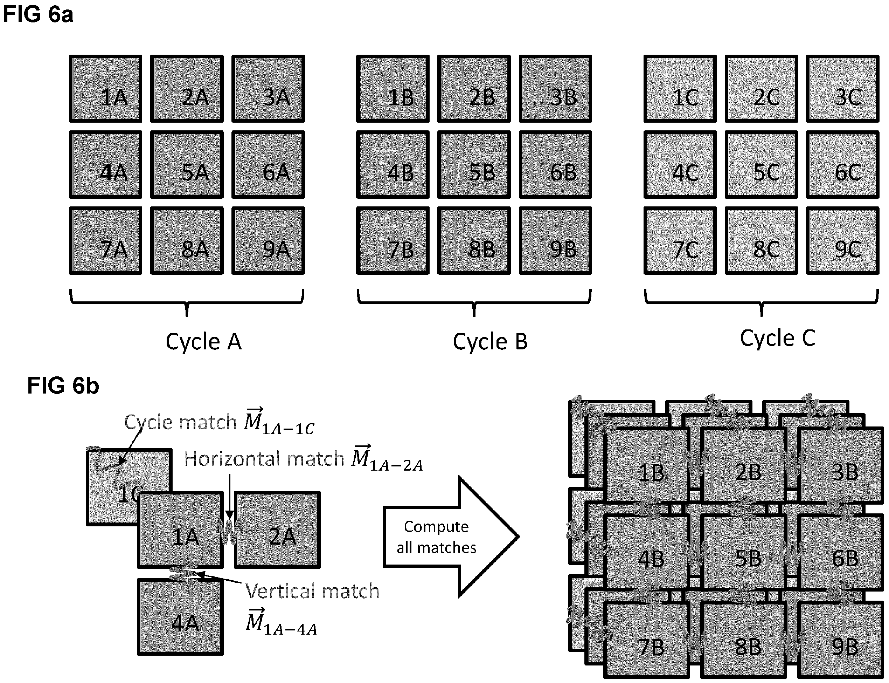

The adjacency graph for the alignment search may simply include the adjacency graph of a single layer image capture scan extended to a third dimension, as shown in figure 6b. The third dimension corresponds to the stacking of images which may be from scans of the sample at different staining cycles of the multiplexing process, or within a same staining cycle but with different fluorescence wavelengths, or simply of multiple scans of the same sample. In the present description, the term « cycle » in the general sense shall refer to all the images of a stack, even if they are from a same staining cycle. Each image represents a layer of the stack. The edges in the stacking dimension connect all layers, i.e., each layer is connected to all others. An alternative is to designate one layer as a reference and to consider only the alignments between this layer and the others.

Figure 6b illustrates an adjacency graph with nodes representing FoV images and edges indicating the pairs of FoV images where alignments are being looked for. Note that some diagonal edges may also be considered if the overlap is sufficient to seek alignment. Note that although the adjacency matrix is represented in 3 dimensions, the actual positioning of FoV images is limited to the x and y dimensions, collinear with the image capture scanning axis.

The stitching and stacking module comprises an algorithm to determine the alignment that may include (but not limited to) an algorithm employing a correlation maximization method [1] or a feature detection and description method such as SIFT [3] or SURF [4] or ORB [5] associated to a feature matching method such as RANSAC [6] or FLANN [7].

Different method specific metrics employed by the alignment algorithm of the stitching and stacking module, e.g., a correlation coefficient, allow to estimate the confidence of an alignment. Only high confidence alignments are retained. Low confidence usually results from a uniform background or when the structures of the two images are too dissimilar. The global optimization isn't impacted negatively by a small proportion of missing alignments. On the contrary, wrong alignments, i.e. alignments found with high confidence but not reflecting a real correspondence of the image, have a negative effect on the quality of the optimization.

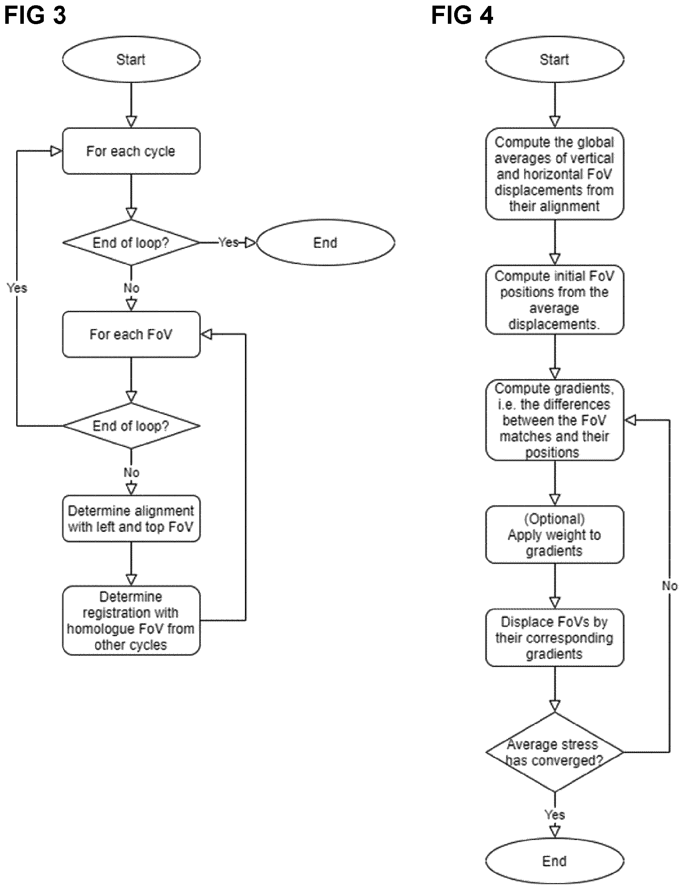

Figure 3 illustrates a flow diagram of an algorithm of the stitching and stacking module using the gradient descent optimization algorithm. In the present case, gradient descent is used to move the tiles along the resulting forces applied on them, minimizing the sum of square of the stresses. Since the "square of stress" is proportional to the spring potential energy (energy of extended spring is $0.5*k*dx^2$), and the gradient of energy over distance is its force, moving the tile along their resultant forces leads the system to an energy minima. The algorithm determines the pairwise alignments, both on the overlaps 10 of the horizontal and vertical edges of the image capture scan pattern, but also against corresponding FoV images on other cycles. Different alignment determination methods can be used or combined. The computation of an alignment for overlaps may not be successful, in which case no alignment is defined between corresponding the FoV images. The alignments may be expressed on a continuous scale (as opposed to a discrete, pixel-based scale).

Once all pairwise alignments are computed, the concomitant optimization of stitching and stacking can be computed with a module that may include (but is not limited to) an algorithm calculating for instance a gradient descent [8] or a linear regression model [9]. Note that in this example, the x and y variables are independent and can be treated separately. An optimization algorithm of the stitching and stacking module implemented with the gradient descent approach according to an embodiment of the invention is illustrated in Figure 4. In figure 4, the optimization algorithm aims at defining a position for each FoV image in the entire stack assembly, i.e. for all FoV images of all image capture scan cycles at once.

As represented on Figure 6b this algorithm can be depicted as a mesh of 3D springs, where the nodes are the positions of the FoV images, and the initial lengths of the springs represent the pairwise alignments. For a given set of springs, there is one equilibrium solution. And changing a spring by a longer or a shorter one would make the system adapt around this new local constraint. Figure 6b illustrates a spring mesh analogy to represent the effect of the global optimization algorithm, however this representation does not depict the fact that in the third dimension, there could be multiple overlapping springs across all levels.

In case of missing alignments or registration, which would correspond to missing springs in this analogy, the position of the affected nodes remains properly defined, because they are still constrained by the remaining springs. In the case where a node does not have any associated spring, its position would not be optimized, and it would remain at its initial location as calculated for instance by a statistical model. As a result, unconnected nodes do usually not have a significant effect in the resulting image assembly as it is generally caused by the FoV image not containing any visual information sufficient to allowing its alignment or registration. This typically occurs with uniform backgrounds, or when the focus is largely off. Similarly, when there are two or more separate blocks without any connection between them, the optimization algorithm works as if they were optimized individually.

*Gradient weighting*

An advantageous characteristic of the embodiment implementing a gradient descent method is to use coefficients on the gradients based on prior knowledge. In the spring mesh analogy, this would correspond to the use of springs of different stiffnesses. For example, this can be used to promote cycle alignment over the stitching, or alignments and registrations with high level or certainty. It is also possible to perform multiple cycle of optimizations, each with different weighting. For example, uniform coefficients for alignments and registration can be used until the first cycle has converged, and then an additional cycle can be performed with coefficients of 0 on alignments, ensuring that registration is prioritized over alignments.

*Outlier detection and pruning*

The detection of outliers, i.e., suspicious alignments, is another advantageous feature of the stitching and stacking module according to embodiments due to the overdetermined nature of the system. Based on the assumption that erroneous alignments or registrations tend to yield FoV images positions that conflicts with their neighbours, it is possible to identify erroneous alignments or registration by searching for those with highest stresses. For instance, using the spring mesh analogy, a spring resulting from a wrong alignment would push or pull strongly on its FoV images. To remove these erroneous alignments or registrations, a simple example of an implementation could consist of removing the alignment or registration with the highest stress and performing the optimization again. This cycle of stress removal and optimizing would be repeated until no stress above a certain threshold is present.

*Advantages*

Compared to a conventional ASHLAR method, a common process employed by the stitching and stacking module according to embodiments, are the detection of pairwise alignments. A conventional ASHLAR method however stitches the first cycle only, and then registers the FoV images of the other cycles against the first cycle. In case of missing alignments and registration in the registration step, a linear model is used to fit the orphan FoV images.

In contrast, a method according to an embodiment of the invention relies on a single global optimization where all pairwise alignments across and between all cycles are considered to determine the best overall position trade-off for all FoV images. In other words, the larger number of pairwise alignments employed compared to a conventional ASHLAR based process provides some redundancy that promotes both the accuracy and robustness of the solution.

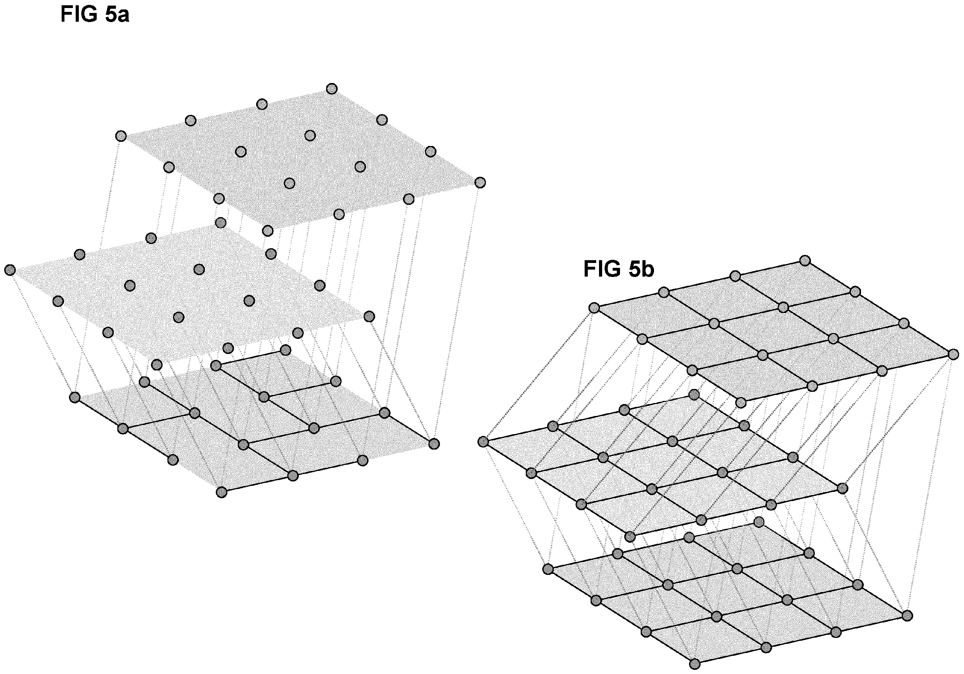

Figure 5a illustrates an adjacency graph with pairwise alignments for an ASHLAR method and figure 5b illustrates an adjacency graph with pairwise alignments using a method according to an embodiment of the invention. In case of an overdetermined system with more matches than FoV images, ASHLAR discards information to obtain a balanced system. In a method according to an embodiment of the invention, the redundancy is used to generate a more accurate and robust solution.

It is desirable to eliminate suspicious alignments or registration, for example by using a correlation coefficient. Both ASHLAR and a method according to an embodiment of the invention support missing alignments and registration. However, a significant advantage of a method according to an embodiment of the invention, thanks to redundancy, is that incorrect pairwise alignments can also be detected from residual optimization errors. Assuming that wrong alignments are less compatible with the global solution than the right ones, they can therefore be identified and pruned one by one until a good level of compatibility is reached. In addition, the implementation based on gradient descent optimization allows for managing the distribution of residual errors. Depending on the application, it is possible to first determine an optimal global solution without gradient weighting, and then fine-tune the cycle alignment only, if the residual registration errors are more harmful than those on the mosaic joints.

With reference to figures 6a to 6g, a simplified didactic example of how the stitching and stacking module computes an optimal solution for stitching and stacking of FoV images according to an embodiment of the invention, is presented below. In this simplified example we consider an image formed of three-by-three tiles, each tile representing an FoV image obtained from a scan of the sample, and a stack of three cycles, i.e., a stack of three image scans which may for instance correspond to images of the sample at different staining cycles. In practice, multiplexing of a tissue sample on a standard slide may typically result in an image formed of a matrix of between 10x10 to 30x30 tiles (FoV images), for instance around 20x20 tiles, and a stack of 5 to 15 cycles, for instance around 10 cycles.

Referring to figure 6a, 3 cycles are acquired, each of which contains 3x3 tiles. Neighbours and homologues are known, i.e., we know that 1A is a neighbour to 2A and 4A, and 1A should be homologous with 1B and 1C.

Referring to figure 6b, for each tile of each cycle, the relative positions $\vec{M}$ (match, corresponding to either an alignments or registration) of its neighbours and homologues, are computed. A match between tile t1 and t2 is defined as the 2D vector going from the position of t1 to the position of t2. To compute the matches, the overlapping regions of neighbours and respectively the entire (or a subpart of) the homologous tiles are used. A match score (normalized cross correlation) is associated to each match.

Note:

- not all matches are necessary for the algorithm to function. Typically, low correlation match can be discarded.
- $M_{1Ato1B} = -M_{1Bto1A}$
- homologue matches for a plurality of layer may be computed for each combination of layer pair, but also only relative to one layer (e.g. the first layer of the stack) in order to limit computational complexity.

Referring to figure 6c, an ASHLAR comparison is illustrated. At this point of the process, ASHLAR differs in the sense that it only looks for neighbourhood matches of layer A. It removes outliers matches (matches that differs too much from the average), but the system is typically still overdetermined. ASHLAR solves this issue by calculating the minimum spanning tree, which removes the lower correlation and results in a solution of tiles positions that is uniquely defined. An ASHLAR based method then aligns the tiles of layer B and C independently on layer A, which is also a balanced system with a unique straightforward solution.

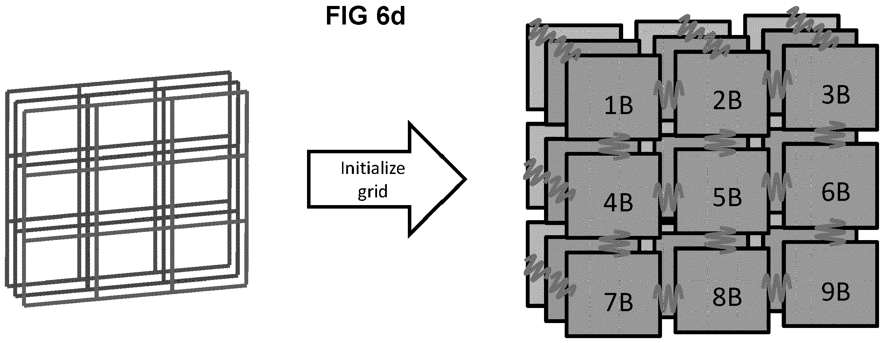

Referring to figure 6d, in the stitching algorithm of the stitching and stacking module according to an embodiment, the average of horizontal and vertical matches of layer A, B, C are used to determine the initial guess for the position of the tiles of layer A. For each remaining layer, their average layer match determines the position of their tiles relative to layer A. Note that this grid initialization has no impact on the final solution, however, a decent initial guess helps reducing the amounts of step necessary to converge to the optimal solution.

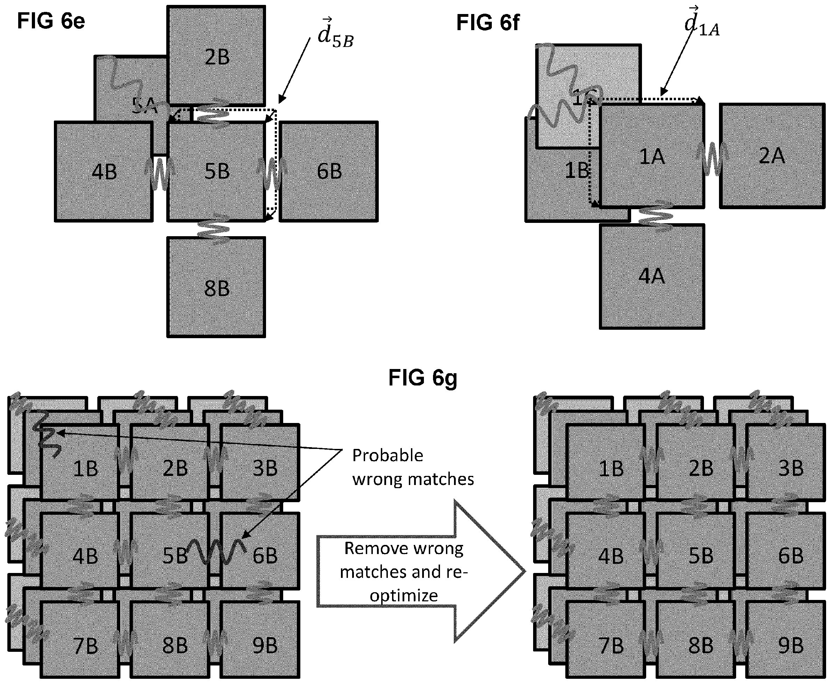

Referring to figure 6e, iteratively, for each given tile, each force $\vec{F}$ associated with it is computed and applied on it. $\vec{F}$ is in effect the force pushing the tile towards the location where its corresponding match wants it to be. $\vec{F}$ can be scaled by some match-dependant factor $c \in [0, 1]$. $c$ can be a function of the match correlation, or a function of whether it corresponds to a homologue or neighbour match, or simply a constant. The tile motion $\vec{d}$ is computed for all tiles, defined as the resultant force multiplied by a constant user-defined learning rate $r \in [0, 1]$. Once all $\vec{d}$ are computed, all tiles are moved by its corresponding $\vec{d}$. This entire process is repeated until the system converges to a value close to the optimal solution, which for instance may be set by a user-defined threshold.

$$\vec{F}_{5B-2B} = c_{5B-2B}(\vec{P}_{5B} - \vec{P}_{2B} - \vec{M}_{5B-2B})$$

$$\vec{F}_{5B-6B} = c_{5B-6B}(\vec{P}_{5B} - \vec{P}_{6B} - \vec{M}_{5B-6B})$$

$$\vec{F}_{5B-8B} = c_{5B-8B}(\vec{P}_{5B} - \vec{P}_{8B} - \vec{M}_{5B-8B})$$

$$\vec{F}_{5B-4B} = c_{5B-4B}(\vec{P}_{5B} - \vec{P}_{4B} - \vec{M}_{5B-4B})$$

Neighbourhood forces

$$\vec{F}_{5B-5A} = c_{5B-5A}(\vec{P}_{5B} - \vec{P}_{5A} - \vec{M}_{5B-5A})$$

Cycle forces

$$\vec{d}_{5B} = r(\vec{F}_{5B-2B} + \vec{F}_{5B-6B} + \vec{F}_{5B-8B} + \vec{F}_{5B-4B} + \vec{F}_{5B-5A})$$

Referring to figure 6f, for tiles at a border or a corner of the image, there will be fewer neighbourhood forces applied on it as these tiles have fewer neighbours. Tiles of the 1st layer have typically more layer matches compared to tiles from other layers. This implies that significantly more force can be applied on them, especially if there are many layers. To compensate for this effect, their forces resulting from layer matches are divided by their number of homologue alignments, $N_{1A}$. Note that $N_{1A}$ is not necessarily the number of layers minus one, as the number of homologue matches can vary from tile to tile, depending on whether a match could be found with reasonable confidence.

$$\vec{F}_{1A-2A} = c_{1A-2A}(\vec{P}_{1A} - \vec{P}_{2A} - \vec{M}_{1A-2A})$$

$$\vec{F}_{1A-4A} = c_{1A-4A}(\vec{P}_{1A} - \vec{P}_{4A} - \vec{M}_{1A-4A})$$

Neighbourhood forces

$$\vec{F}_{1A-1B} = \frac{c_{1A-1B}}{N_{1A}}(\vec{P}_{1A} - \vec{P}_{1B} - \vec{M}_{1A-1B})$$

$$\vec{F}_{1A-1C} = \frac{c_{1A-1C}}{N_{1A}}(\vec{P}_{1A} - \vec{P}_{1C} - \vec{M}_{1A-1C})$$

Cycle forces

$$\vec{d}_{1A} = r(\vec{F}_{1A-2A} + \vec{F}_{1A-4A} + \vec{F}_{1A-1B} + \vec{F}_{1A-1C})$$

Referring to figure 6g, once the optimization is complete, for instance when the decrease in average stress (= $\|\vec{F}\|$) from iteration to iteration have dropped below a user-defined threshold), the final solution can be searched for individual high remaining stresses which are typically indicative of wrong matches. These wrong matches can be pruned off, and an entire optimization can be started again from the current tile position. Note that stresses of wrong matches can propagate on closely connected tiles, so a safe procedure would be to remove only the highest stress before redoing the optimization. Alternatively, it can be assumed that high stresses that are far apart (at a distance higher than a user-defined constant) are independent, and thus can be removed safely together before resuming the optimization.

The match pruning is another advantage of this technique. ASHLAR based processes remove low correlation matches and matches that are too different from the average, yielding a balanced system that is straightforward to solve, but this implies that the remaining matches have to be correct. An individual wrong match has a significant impact on the two ends at each of its side on the minimal spanning tree.

In the present invention, a "match voting behaviour" emerges from the overdetermined system, allowing to detect wrong match empirically rather than rely on image correlation. The tree remains interconnected with multiple matches contributing to the position of each tile.

## Literature References

[1] Jeremy Muhlich, Yu-An Chen, Douglas Russell, Peter K Sorger. Stitching and registering highly multiplexed whole slide images of tissues and tumors using ASHLAR software. BioRxiv 2021.04.20.440625. (2021) https://doi.org/10.1101/2021.04.20.440625

[2] Georgios Evangelidis, Emmanouil Psarakis. Parametric Image Alignment Using Enhanced Correlation Coefficient Maximization. IEEE Transactions on Pattern Analysis and Machine Intelligence, Institute of Electrical and Electronics Engineers, 2008, 30 (10), pp.1858-1865. hal-00864385 (2013)

[3] Lowe, D.G. Distinctive Image Features from Scale-Invariant Keypoints. International Journal of Computer Vision 60, 91-110. (2004) https://doi.ors/10.1023/B:VISI.0000029664.99615.94

[4] Bay, H., Tuytelaars, T., Van Gool, L. SURF: Speeded Up Robust Features. In: Leonardis, A., Bischof, H., Pinz, A. (eds) Computer Vision - ECCV 2006. ECCV 2006. Lecture Notes in Computer Science, vol 3951. Springer, Berlin, Heidelberg. (2006) https://doi.org/10.1007/11744023_32

[5] Rublee, Ethan & Rabaud, Vincent & Konolige, Kurt & Bradski, Gary. ORB: an efficient alternative to SIFT or SURF. Proceedings of the IEEE International Conference on Computer Vision. 2564-2571. (2011) https://doi.ors/10.1109/ICCV.2011.6126544

[6] Martin A. Fischler and Robert C. Bolles. Random sample consensus: a paradigm for model fitting with applications to image analysis and automated cartography. Commun. ACM 24, 6 (June 1981), 381-395. (1981) https://doi.org/10.1145/358669.358692

[7] Muja, M. and G. Lowe, D. FAST APPROXIMATE NEAREST NEIGHBORS WITH AUTOMATIC ALGORITHM CONFIGURATION. In Proceedings of the Fourth International Conference on Computer Vision Theory and Applications. (2009) https://doi.ors/10.5220/0001787803310340

[8] Cauchy, A. ANALYSE MATHÉMATIQUE. - Méthode générale pour la résolution des systèmes d'équations simultanées. In Oeuvres complètes: Series 1 (Cambridge Library Collection - Mathematics, pp. 399-402). Cambridge: Cambridge University Press. (2009) https://doi.org/10.1017/CBQ9780511702396.063

[9] Björck, Åke. Numerical Methods for Least Squares Problems. Society for Industrial and Applied Mathematics. (1996) https://doi.org/10.1137/1.9781611971484

## Claims

1. A digital image processing system configured for processing a plurality of image capture scans of a sample obtained from a microscope in a corresponding plurality of scan cycles, each image capture scan comprising a plurality of individual field of view (FoV) images that form one image when stitched together, each FoV image having a border zone overlapping a border zone of an adjacent FoV image, the plurality of image capture scans corresponding to a plurality of images that are stackable, the system comprising a computing system comprising a stitching and stacking program module installed and executable in the computing system, **characterized in that** the stitching and stacking program module is configured to compute a position of each of the FoV images from all image capture scans concomitantly and thereby concomitantly stitch together the individual FoV images and stack said plurality of images.

2. The system according to the preceding claim wherein concomitant computation of each of the FoV images from all image capture scans is based on a mesh spring model where nodes are the positions of the FoV images and the nodes are interconnected by springs with a predefined spring constant, where initial lengths of the springs represent the pairwise alignments between overlapping FoV image border zones and the alignments between FoV images of different scan cycles.

3. The system according to the preceding claim wherein the spring constant is different between FoV images of a given cycle and the spring constants between FoV images of different cycles.

4. The system according to the preceding claim wherein the spring constant is tuneable to allow changing an equilibrium in positioning of between FoV images of a given layer and FoV images of different layers.

5. The system according to any preceding claim wherein the stitching and stacking module comprises an algorithm to determine an alignment between FoV images employing a correlation maximization method or a feature detection and description method such as SIFT or SURF or ORB associated to a feature matching method such as RANSAC or FLANN.

6. The system according to any preceding claim wherein the stitching and stacking program module comprises an optimization algorithm based on calculating a gradient descent or based on a linear regression model, configured to compute a position of each of the FoV images from all image capture scans concomitantly.

7. The system according to any preceding claim wherein the stitching and stacking program module is configured to detect outlier FoV images that have pairwise connections to adjacent FoV images outside of a defined threshold.

8. The system according to the preceding claim in conjunction with claim 3, wherein the stiching and stacking program module is configured to remove the detected outlier FoV images from the optimization calculation, and re-run the optimization algorithm.

9. The system according to any preceding claim configured for processing a plurality of image capture scans of a biological tissue sample obtained from a microscope in a corresponding plurality of scan cycles,

10. The system according to the preceding claim wherein at least some of the plurality of scan cycles correspond to staining cycles of the sample, obtained from a multiplexing process.

11. A biological sample processing system (1) including a sample processing station (3), a microfluidic cartridge (4) mounted in/on the sample processing station, an imaging unit (2) comprising a microscope (7) movable relative to the microfluidic cartridge configured to capture FoV images of a biological tissue sample in the microfluidic cartridge, and a digital processing system according to any of the preceding claims.

12. The biological sample processing system of the preceding claim configured for performing a plurality of immunofluorescence staining cycles of the biological tissue sample in a multiplexing process.

13. The biological sample processing system of the preceding claim wherein each staining cycle comprises a DAPI marker such that each image of the multiplexing process comprises cell nuclei features.

14. The biological sample processing system of either of the two directly preceding claim wherein at least some of the staining cycles comprises different markers such that the corresponding images are different one from the other, except for cell nuclei features.

15. The biological sample processing system of any of the four directly preceding claims comprising a user interface configured to display the images, wherein the system is configured to display images of the stack individually or in a combination of features of two or more images of the stack.

**FIG 1**

EP 4 375 926 A1

**FIG 1 continued**

d)

e)

f)

**FIG 2a**

**FIG 2b**

# FIG 3

# FIG 4

FIG 5b

FIG 5a

FIG 6a

Cycle A | Cycle B | Cycle C

Compute all matches

FIG 6b

Cycle match $\vec{M}_{1A-1C}$

Horizontal match $\vec{M}_{1A-2A}$

Vertical match $\vec{M}_{1A-4A}$

FIG 6d

Initialize grid

1B 2B 3B
4B 5B 6B
7B 8B 9B

FIG 6e

FIG 6f

FIG 6g

Probable wrong matches

Remove wrong matches and re-optimize

EP 4 375 926 A1

**FIG 7**

CONTROL UNIT

IMAGE CAPTURE AND PROCESSING SYSTEM

IMAGE PROCESSING SYSTEM

STITCHING AND STACKING MODULE

USER INTERFACE

Reagent flow

FIG 8
(prior art)

Minimum spanning tree

Europäisches
Patentamt

European
Patent Office

Office européen
des brevets

# EUROPEAN SEARCH REPORT

Application Number

EP 22 21 0031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/095912 A9 (CANON KK [JP]; CANON INFORMATION SYST RES [AU]) 30 July 2015 (2015-07-30) | 1,5-15 | INV. G06T7/30 G06T7/38 |
| Y | * paragraphs [0039], [0041] – [0042], | 2 | |
| A | [0068], [0077] – [0079], [0095] – [0096]; figures 3B, 4-6, 7B, 8, 9 * * paragraphs [0086], [0104], [0110] – [0111] * | 3,4 | |
| | ----- | | |
| Y | PEREIRA ANDRÉ F. ET AL: "Creating High-Resolution Multiscale Maps of Human Tissue Using Multi-beam SEM", PLOS COMPUTATIONAL BIOLOGY, vol. 12, no. 11, 21 November 2016 (2016-11-21), page e1005217, XP093045482, DOI: 10.1371/journal.pcbi.1005217 Retrieved from the Internet: URL:https://journals.plos.org/ploscompbiol /article/file?id=10.1371/journal.pcbi.1005 217&type=printable> * section 2.4; figure 2 * | 2 | |
| | ----- | | |

TECHNICAL FIELDS SEARCHED (IPC)

G06T

The present search report has been drawn up for all claims

| Place of search | Date of completion of the search | Examiner |
|---|---|---|
| Munich | 10 May 2023 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                           
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 0031

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | Publication date | Patent family member(s) | Publication date |
|---|---|---|---|
| WO 2015095912 A9 | 30-07-2015 | AU 2013273832 A1 | 09-07-2015 |
| | | WO 2015095912 A1 | 02-07-2015 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2020076978 W

### Non-patent literature cited in the description

- **JEREMY MUHLICH ; YU-AN CHEN ; DOUGLAS RUSSELL ; PETER K SORGER.** Stitching and registering highly multiplexed whole slide images of tissues and tumors using ASHLAR software. *BioRxiv 2021.04.20.440625,* 2021, https://doi.org/10.1101/2021.04.20.440625
- Parametric Image Alignment Using Enhanced Correlation Coefficient Maximization. **GEORGIOS EVANGELIDIS ; EMMANOUIL PSARAKIS.** IEEE Transactions on Pattern Analysis and Machine Intelligence. Institute of Electrical and Electronics Engineers, 2008, vol. 30, 1858-1865
- **LOWE, D.G.** Distinctive Image Features from Scale-Invariant Keypoints. *International Journal of Computer Vision,* 2004, vol. 60, 91-110, https://doi.ors/10.1023/B:VISI.0000029664.99615.94
- SURF: Speeded Up Robust Features. **BAY, H. ; TUYTELAARS, T. ; VAN GOOL, L.** Computer Vision - ECCV 2006. ECCV 2006. Lecture Notes in Computer Science. Springer, 2006, vol. 3951
- **RUBLEE, ETHAN ; RABAUD, VINCENT ; KONOLIGE, KURT ; BRADSKI, GARY.** ORB: an efficient alternative to SIFT or SURF. *Proceedings of the IEEE International Conference on Computer Vision,* 2011, 2564-2571, https://doi.ors/10.1109/ICCV.2011.6126544
- **MARTIN A. FISCHLER ; ROBERT C. BOLLES.** Random sample consensus: a paradigm for model fitting with applications to image analysis and automated cartography. *Commun. ACM,* June 1981, vol. 24 (6), 381-395, https://doi.org/10.1145/358669.358692
- **MUJA, M. ; G. LOWE, D.** FAST APPROXIMATE NEAREST NEIGHBORS WITH AUTOMATIC ALGORITHM CONFIGURATION. *Proceedings of the Fourth International Conference on Computer Vision Theory and Applications,* 2009, https://doi.ors/10.5220/0001787803310340
- ANALYSE MATHÉMATIQUE. - Méthode générale pour la résolution des systèmes d'équations simultanées. **CAUCHY, A.** Oeuvres complètes: Series 1 (Cambridge Library Collection - Mathematics. Cambridge University Press, 2009, 399-402
- **BJÖRCK, ÅKE.** Numerical Methods for Least Squares Problems. Society for Industrial and Applied Mathematics, 1996